# EUROPEAN PATENT APPLICATION

(11) **EP 4 837 995 A1**
(43) Date of publication of application: **11.11.2026**
(21) Application number: 25300058.2
(22) Date of filing: 08.05.2025
(51) Int. Cl.: C25B 1/04, C25B 3/26, C25B 9/23, C25B 11/031, C25B 11/054, C25B 11/067, C25B 11/081

(54) **ANODE CATALYST LAYER FOR A POLYMER ELECTROLYTE MEMBRANE ELECTROLYSER**

(71) Applicant: Johnson Matthey Hydrogen Technologies Limited, Royston, Hertfordshire SG8 5HE (GB)
(72) Inventor: The designation of the inventor has not yet been filed
(74) Representative: Johnson Matthey Public Limited Company

(57) **Abstract**

According to the present invention there is provided an anode catalyst layer for a polymer electrolyte membrane electrolyser. The anode catalyst layer comprises an oxygen evolution reaction (OER) electrocatalyst and an ion-conducting polymer. The oxygen evolution reaction electrocatalyst comprises an iridium-containing material supported on an inorganic oxide support material. The anode catalyst layer comprises a loading of iridium of less than 0.60 mgₗᵣ/cm². The anode catalyst layer has a mean average cross-sectional thickness of ≥3.0 µm and ≤10 µm. The anode catalyst layer comprises pores having a total pore volume, wherein the pores comprise first pores having a pore diameter in a range of 50 nm to 500 nm, wherein the first pores have a pore volume of at least 30% of the total pore volume of the pores in the anode catalyst layer, as measured by mercury intrusion porosimetry.

## Description

### Field of the Invention

This invention relates to an anode catalyst layer and a catalyst-coated membrane for a polymer electrolyte membrane electrolyser, in particular for a proton exchange membrane (PEM) water electrolyser, and to processes for their manufacture.

### Background of the Invention

Solid polymer electrolyte membranes, such as proton exchange membranes (PEMs) or anion exchange membranes (AEMs), may be employed for electrolysis in combination with anode and cathode catalyst layers which are positioned on opposite sides of the membrane. In some cases, the anode catalyst layer and/or the cathode catalyst layer are applied to a face of the membrane to form a catalyst-coated membrane (CCM). In other cases, the respective catalyst layers may be applied to other components, such as transport layers, and the catalyst layers compressed against the membrane during assembly and subsequent use of the electrolysis cell.

For water electrolysis, hydrogen evolution reaction (HER) catalysts are used in such electrolyser cathode catalyst layers, for example, HER catalysts comprising platinum, such as platinum on a carbon support. Oxygen evolution reaction (OER) catalysts are used in electrolyser anode catalyst layers, with noble metal-containing catalysts, such as iridium and/or ruthenium-containing catalysts, offering a particularly good balance between OER activity and stability under electrolysis conditions. The OER reaction in acidic conditions is approximated by the following equation:

2H₂O → O₂ + 4H⁺ + 4e⁻

Separate film layers, typically formed from non-ion conducting polymers, may be positioned around the edge region of a CCM, for example on exposed surfaces of the polymer electrolyte membrane where no electrocatalyst is present (but will also often overlap on to the edge of the electrocatalyst layer) to provide a seal to prevent escape of reactant and product gases, to reinforce and strengthen the edge of the CCM and provide a suitable surface for supporting subsequent components such as sub-gaskets or elastomeric gaskets. An adhesive layer may be present on one or both surfaces of the seal film layer.

CCMs may be incorporated into a membrane electrode assembly (MEA), which is essentially composed of five layers. The central layer is the polymer electrolyte membrane. On either side of the polymer electrolyte membrane there is an electrocatalyst layer, containing an electrocatalyst designed for the specific electrolytic reaction. Finally, adjacent to each electrocatalyst layer there is a transport layer, the features of which depend on the final MEA application and stack configuration. Such transport layers allow the reactants to reach the electrocatalyst layer and products to leave.

Catalyst-coated membranes are suitably produced at scale using roll-to-roll coating processes. Such processes utilise coating techniques, such as slot-die coating or gravure coating, to form a catalyst layer directly on the surface of a polymer electrolyte membrane, or on a decal transfer substrate with subsequent transfer of the layer onto the polymer electrolyte membrane. A description of a roll-to-roll coating process is provided in US2024/0290936A1 (W.L. Gore & Associates GmbH). Such processes typically utilise a catalyst ink comprising a catalyst and an ionomer dispersed in a solvent, or mixture of solvents, such as a mixture of an alcohol and water. The role of the ionomer is to act as a conductor extending proton conduction from the bulk of the membrane to the surface of the catalyst and to act as a binder providing structure to the catalyst layers.

Due to the relative cost and scarcity of iridium and ruthenium it is desirable to reduce the loading of these metals in electrolyser anode layers, for example to less than 0.6 mg/cm² of the anode layer. There are however significant challenges associated with the formation of such low-metal content electrolyser anode layers by suitable coating techniques for roll-to-roll coating, such as slot-die or gravure coating, whilst maintaining catalyst layer performance. There remains a need to further enhance and develop anode layers for electrolysis with low iridium and/or ruthenium content, which can be efficiently formed using roll-to-roll coating processes.

### Summary of the Invention

The present inventors have identified that, when using a supported anode electrocatalyst, such as an oxygen evolution reaction (OER) electrocatalyst supported on an inorganic oxide support material, the combination of certain properties of an anode catalyst layer of a polymer electrolyte membrane electrolyser can enable low loading anode layers while retaining cell performance.

Accordingly, in a first aspect of the invention there is provided an anode catalyst layer for a polymer electrolyte membrane electrolyser, the anode catalyst layer comprising:
an oxygen evolution reaction (OER) electrocatalyst and an ion-conducting polymer,
wherein the oxygen evolution reaction electrocatalyst comprises an iridium-containing material supported on an inorganic oxide support material,
wherein the anode catalyst layer comprises a loading of iridium of less than 0.60 mgₗᵣ/cm²,
wherein the anode catalyst layer has a mean average cross-sectional thickness of ≥3.0 µm and ≤10 µm;
wherein the anode catalyst layer comprises pores having a total pore volume, wherein the pores comprise first pores having a pore diameter in a range of 50 nm to 500 nm,
wherein the first pores have a pore volume of at least 30% of the total pore volume of the pores in the anode catalyst layer, as measured by mercury intrusion porosimetry.

The anode catalyst layer can have a porosity of at least 20%, preferably at least 25%, more preferably at least 30%, more preferably >32%, more preferably >35%, more preferably >37%, more preferably >40%, and most preferably at least 41%, based on the total volume of the anode catalyst layer.

The anode catalyst layer can have a sheet resistance of 20,000 kΩ/sq or less, preferably 17,500 kΩ/sq or less, more preferably <17,200 kΩ/sq, more preferably <16,000 kΩ/sq, more preferably 13,500 kΩ/sq or less, more preferably 12,500 kΩ/sq or less, and most preferably <10,000 kΩ/sq.

According to a second aspect, there is provided an anode catalyst layer for a polymer electrolyte membrane electrolyser, the anode catalyst layer comprising:
an oxygen evolution reaction (OER) electrocatalyst and an ion-conducting polymer,
wherein the oxygen evolution reaction electrocatalyst comprises an iridium-containing material supported on an inorganic oxide support material,
wherein the anode catalyst layer comprises a loading of iridium of less than 0.60 mgₗᵣ/cm²,
wherein the anode catalyst layer has a mean average cross-sectional thickness of ≥3.0 µm and ≤10 µm; and
wherein the anode catalyst layer has a porosity of at least 20% based on the total volume of the anode catalyst layer.

According to a third aspect, there is provided a catalyst-coated membrane (CCM) for an electrolyser, wherein the CCM comprises a polymer electrolyte membrane and an anode catalyst layer according to the first or second aspect.

According to a fourth aspect, there is provided an electrolyser comprising an anode catalyst layer according to the first or second aspect, or a catalyst-coated membrane according to the third aspect.

### Brief Description of the Drawings

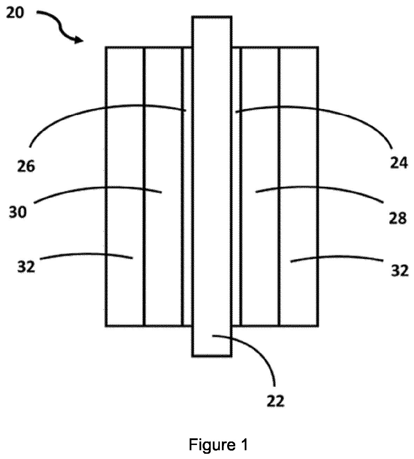

Figure 1 is a schematic representation of an example of a water electrolyser (20) incorporating a catalyst coated membrane (CCM).

### Detailed Description of the Invention

Preferred and/or optional features of the invention will now be set out. Any of the preferred and/or optional features of any aspect may be combined, either singly or in combination, with any other preferred and/or optional features of any aspect of the invention unless the context demands otherwise.

### Anode catalyst layer

The present invention provides an anode layer for an electrolyser. Preferably, the electrolyser is a water electrolyser, such as a proton exchange membrane (PEM) water electrolyser or an AEM water electrolyser, and preferably a PEM water electrolyser. The anode layer comprises an oxygen evolution reaction (OER) electrocatalyst. The OER electrocatalyst is an iridium-containing material. In a water electrolyser, the anode catalyst layer is an oxygen evolving layer. The anode catalyst layer may also be of utility in other electrolyser applications which utilise an oxygen evolving catalyst layer, for example an electrolyser used for the reduction of carbon dioxide.

### Oxygen evolution reaction (OER) electrocatalyst

The anode catalyst layer comprises an OER electrocatalyst. The OER electrocatalyst comprises an iridium-containing material supported on an inorganic oxide support material. Preferably, the iridium-containing material is an oxide of iridium. Such materials provide a suitable balance of OER catalytic activity and stability. Suitably the oxide of iridium is a doped or undoped iridium oxide (IrOx), or an iridium mixed metal oxide, for example a mixed metal oxide material comprising iridium and a metal M, wherein M = Ta, Nb, Ti, Rh, Ru or Pt. Such materials may be doped with one or more further elements or may be undoped.

Such oxides of iridium may be amorphous, semi-amorphous, or may be crystalline (typically with a rutile crystal structure). Preferably, the oxide of iridium is semi-amorphous. By semi-amorphous it is meant herein that broad Bragg peaks are observable in the X-ray diffraction (XRD) pattern of the material which correspond to the crystalline oxide, for example an iridium oxide material with a broad Bragg peak in the 2-theta range 52° to 56° and a peak in the 2-theta range 32° to 36°. By a broad peak it is meant herein that the peak height is less than the full width at half maximum.

Suitably, the oxides of iridium comprise a mixture of oxide and hydroxide groups, for example an iridium oxide (IrOx) material comprising a mixture of oxide and hydroxide groups, with both Ir(III) and Ir(IV) species present. Some Ir(0) may be present in the oxide material, although it may be preferred that no Ir(0) is present, for example, that no Ir(0) is observable by x-ray diffraction analysis.

The loading of total metal in the iridium-containing material (e.g. iridium and metal M) on the support material is suitably in the range of and including 10 to 90 wt%, preferably in the range of and including 15 to 75 wt%, more preferably in a range of 25 to 60 wt.%, and more preferably in a range of 30 to 45 wt.%, of the total weight of the supported OER electrocatalyst.

The anode catalyst layer has an iridium loading of less than 0.50 mgₗᵣcm⁻², preferably less than 0.45 mgₗᵣcm⁻², preferably less than 0.40 mgₗᵣcm⁻², preferably less than 0.35 mgₗᵣcm⁻², preferably less than 0.30 mgₗᵣcm⁻², and preferably 0.283 mgₗᵣcm⁻² or less, in which the iridium loading is the amount of iridium per x-y geometric (in-plane) area of the anode layer. The lower limit of the iridium loading in the anode catalyst layer is not particularly limited in the present invention and is dependent on the desired electrochemical performance. Suitably, the iridium loading is at least 0.05 mgₗᵣcm⁻², preferably at least 0.10 mgₗᵣcm⁻², preferably at least 0.15 mgₗᵣcm⁻², preferably at least 0.20 mgₗᵣcm⁻², and preferably at least 0.213 mgₗᵣcm⁻². The iridium loading can be in a range comprising a combination of any of the aforementioned upper and lower limits. For example, the total iridium loading in the anode catalyst layer can be in the range of at least 0.05 to less than 0.50 mgₗᵣcm⁻², in the range of and including 0.10 to 0.45 mgₗᵣcm⁻², 0.15 to 0.40 mgₗᵣcm⁻², 0.20 to 0.35 mgₗᵣcm⁻², 0.20 to 0.30 mgₗᵣcm⁻², and preferably 0.213 to 0.283 mgₗᵣcm⁻². The iridium loading of the anode catalyst layer may be suitably determined by x-ray fluorescence (XRF) analysis.

### Inorganic oxide support material

Preferably, the inorganic oxide support material is a particulate inorganic oxide support material. Preferably, the inorganic oxide support material is a metal oxide support material, such as a transition metal oxide (e.g. titania or zirconia) or an oxide of a main group metal (e.g. alumina). Preferably, the inorganic oxide support material is an oxide of titanium, zirconium, niobium, tantalum, aluminium, manganese, cerium, tungsten, silicon, tin, or molybdenum. For example, the inorganic oxide can be doped or undoped TiO₂, ZrO₂, Nb₂O₅, Ta₂O₅, Al₂O₃, MnO₂, Ce₂O₃, CeO₂, WO₃, SiO₂, SnO₂ or MoO₃. Preferably, the inorganic oxide support is a (doped or undoped) titanium oxide, e.g. TiO₂. Preferably, the inorganic oxide support is a (doped or undoped) zirconium oxide, e.g. ZrO₂.

### Ion-conducting polymer

The anode layer comprises an ionomer. suitably, the ionomer is a proton-conducting polymer or an anion-conducting polymer, such as a hydroxyl anion-conducting polymer. Preferably, the ionomer is a proton-conducting polymer. Suitably, the anode layer ionomer comprises sulfonic acid groups. Preferably, the ionomer is a perfluorinated sulfonic acid ionomer, or a partially-fluorinated or non-fluorinated hydrocarbon sulfonic acid ionomer. Mixtures of ionomers may also be employed. Suitably, the ionomer is perfluorinated, partially fluorinated or hydrocarbon-based.

Preferably, the ionomer comprises sulfonic acid groups and has an equivalent weight of about 1100 or less, typically about 900 or less, suitably about 850 or less. Typically, the anode layer ionomer comprises sulfonic acid groups and has an equivalent weight of at least about 450. The equivalent weight of the ionomer may be readily measured using an acid titration following a hydroxide exchange. For example, a sample may be vacuum dried at about 110°C for 16 hours to obtain about 2 g of the dried material. The material may then be immersed in about 30 mL of a 0.1N NaOH solution to substitute sodium ions for protons in the sample. Then titration by neutralisation is carried out, for example using 0.1N hydrochloric acid

Preferably, the ionomer comprises sulfonic acid groups and is a short side chain ionomer. By short side chain ionomer it is meant herein that the side chain has a length of 3 atoms connecting the backbone and the sulfonic acid group, preferably the side chain is [polymer backbone]-O-CF₂CF₂-SO₃H, for example -CF(-O-CF₂CF₂-SO₃H)(CF₂)ₙ-. Such materials may be purchased, for example Aquivion (RTM) PFSA ionomers from Syensqo SA.

Alternatively, it may be preferred that the ionomer comprises sulfonic acid groups and is a long side chain ionomer. By long side chain ionomer it is meant herein that the side chain has a length of 4 or 5 atoms connecting the backbone and the sulfonic acid group, preferably the side chain is [polymer backbone]-O-CF₂CF(CF₃)OCF₂CF₂-SO₃H, or - OCF₂CF₂CF₂CF₂SO₃H. Such materials may be purchased, for example Nafion (RTM) PFSA ionomers from Chemours or Forblue (RTM) i-series ionomers from AGC.

### Other additives

In some embodiments, the anode catalyst layer may comprise other components, for example the catalyst ink may comprise a radical reducing agent, for example a cerium-containing compound, such as cerium oxide or cerium metal oxide. In some embodiments, the anode catalyst layer consists essentially of the OER electrocatalyst, and at least one ion-conducting polymer.

### Sheet resistance

The anode catalyst layer preferably has a sheet resistance (in-plane) of less than 20,000 kΩ/sq, more preferably 17,500 kΩ/sq or less, more preferably <17,200 kΩ/sq, more preferably <16,000 kΩ/sq, more preferably 15,000 kΩ/sq or less, more preferably 13,500 kΩ/sq or less, more preferably 13,000 kΩ/sq or less, more preferably 12,500 kΩ/sq or less, more preferably 10,000 kΩ/sq or less, and most preferably 7,500 kΩ/sq or less. The sheet resistance of the anode catalyst layer can be determined using methods described in the Examples section below. The powder conductivity of the OER electrocatalyst can affect the sheet resistance in the anode catalyst layer. In particular, a catalyst powder which exhibits a higher powder conductivity typically results in a catalyst layer with a lower sheet resistance (although other conductive additives may also be added to tune the sheet resistance of the anode layer).

### Porosity

The anode catalyst layer comprises pores. The pores have a total pore volume, as measured by mercury intrusion porosimetry, suitably based on pores that have a pore diameter in a range of >3 nm to <1 µm.

The anode catalyst layer can have a porosity of at least 20%, preferably at least 25%, more preferably at least 30%, more preferably at least 32%, more preferably at least 35%, more preferably at least 37%, and more preferably at least 40%. The anode catalyst layer can have a porosity of less than 75%, preferably less than 70%, more preferably less than 65%, more preferably less than 60%, more preferably less than 55%, more preferably less than 50%. The anode catalyst layer can have a porosity in a range comprising a combination of any of the aforementioned upper and lower limits. For example, the anode catalyst layer can have a porosity of at least 20% and less than 75%, preferably at least 25% and less than 70%, preferably at least 30% and less than 65%, preferably at least 32% and less than 60%, and preferably at least 35% and less than 50%. The porosity (%) can be calculated according to the formula porosity (%) = Vₚₒᵣₑ / Vₜₒₜ × 100, where Vₚₒᵣₑ is the total pore volume and Vₜₒₜ is the total (geometric) volume of the catalyst layer. The total pore volume can be determined by mercury intrusion porosimetry, for example using the methods described in the Examples section below.

The anode catalyst layer comprises first pores having a pore diameter in the range of 50 nm to 500 nm. The first pores (i.e. the pores that have a pore diameter in the range of 50nm to 500 nm) have a pore volume that is at least 30% of the total pore volume of the pores in the anode catalyst layer. Preferably, the first pores have a pore volume that is at least 34%, preferably at least 35%, preferably at least 37%, preferably more than 37%, preferably at least 40%, preferably at least 45%, preferably at least 46%, preferably more than 46%, and more preferably at least 48%, of the total pore volume of the pores in the anode catalyst layer. The first pores can have a pore volume that is less than 80%, preferably less than 75%, preferably less than 70%, preferably less than 65%, or preferably 63% or less, of the total pore volume of the pores in the anode catalyst layer. The first pores can have a pore volume as a percentage of the total pore volume that is in a range comprising a combination of any of the aforementioned upper and lower limits. For example, the first pores can have a pore volume in a range of at least 34% to <80%, at least 35% to <75%, at least 37% to <70%, at least 40% to <65%, or >46% to ≤63%. The percentage pore volume attributable to the first pores can be determined by mercury intrusion porosimetry.

The pores can have a median pore diameter of at least 50 nm, preferably at least 75 nm, and more preferably at least 85 nm. The pores can have a median pore diameter of less than 200 nm, preferably less than 175 nm, more preferably less than 150 nm, more preferably 145 nm or less. The pores can have a median pore diameter in a range comprising a combination of any of the aforementioned upper and lower limits. The median pore diameter can be determined by mercury intrusion porosimetry.

### Thickness

The anode catalyst layer has a mean average cross-sectional thickness of ≥3.0 µm and ≤10.0 µm. Preferably, the anode catalyst layer has a mean average cross-sectional thickness of 23.3 µm, preferably ≥3.5 µm, preferably 23.6 µm, preferably >3.6 µm, more preferably ≥3.8 µm, more preferably ≥3.9 µm, more preferably ≥4.0 µm. Preferably the anode catalyst layer has a mean average cross-sectional thickness of <9.0 µm, <8.0 µm, <7.0 µm, or ≤6.2 µm. The anode catalyst layer can have a mean average cross-sectional thickness in a range comprising a combination of any of the aforementioned lower and upper limits. For example, the anode catalyst layer can have a mean average cross-sectional thickness in a range of ≥3.3 µm to ≤10.0 µm, preferably >3.6 µm to <9.0 µm, more preferably ≥3.8 µm to <8.0 µm, more preferably ≥3.9 µm to <7.0 µm, more preferably ≥4.0 µm to ≤6.2 µm. The mean average cross-sectional thickness is a through-plane thickness which can be determined using the method described in the Examples below.

### Anode catalyst ink

Anode catalyst layers of the present invention may be prepared by coating an anode catalyst ink onto a substrate. The anode catalyst layers may suitably be formed from an anode catalyst ink comprising, or consisting of, the OER electrocatalyst, the ion-conducting polymer, one or more solvents, and optionally water. Preferably, the anode catalyst ink comprises water. Suitably the catalyst ink is an aqueous ink. Suitably, the solvent is a water miscible solvent, such as an alcohol, preferably a linear or branched C₁-C₇ alcohol. Preferably, the solvent is selected from one or more of methanol, ethanol, 1-propanol, 2-propanol, 1-butanol, 2-butanol, tert-butanol, or a glycol ether, preferably a glycol ether of formula HOCH₂CH₂OR in which R is a linear or branched C₁-C₄ alkyl, such as 2-butoxyethanol. More preferably, the solvent is 2-butoxyethanol. Use of a glycol ether, such as 2-butoxyethanol, offers advantages in terms of safety profile in comparison with alcohol solvents, such as methanol or ethanol, relating to a reduced flash point and/or a reduction in harmful oxidation products during catalyst layer manufacture.

The catalyst ink may comprise other components, for example the catalyst ink may comprise a cerium-containing compound, such as cerium oxide or cerium metal oxide.

Suitably, the anode catalyst ink comprises water and/or a solvent (55 to 75 wt.%), ionomer (2 to 15 wt.%), and the OER electrocatalyst (20 to 40 wt.%). It will be understood that other components may be present in the ink, such as a radical reducing agent (for example a cerium-containing compound, such as cerium oxide or cerium metal oxide), or additional metal-containing particles, such as platinum. In some embodiments, the anode catalyst ink consists essentially of water and/or solvent (55 to 75 wt.%), an ion-conducting polymer (2 to 15 wt.%), the OER electrocatalyst (20 to 40 wt.%) with the weight % of each component adding up to 100%.

The catalyst inks may be suitably prepared using a process comprising the step of forming a dispersion comprising the OER electrocatalyst and the ion-conducting polymer dispersed in the solvent and water (if present). The components of the catalyst ink may be combined or added in any order, for example the OER electrocatalyst may be added to a dispersion of the ion-conducting polymer in the solvent and water (if present).

The anode catalyst layer is formed by applying the catalyst ink to a substrate. In some preferred embodiments, the catalyst ink is applied to the substrate using k-bar coating or preferably an apparatus comprising a slot-die or gravure roller. In some preferred embodiments, the catalyst ink is applied to the substrate using a laser transfer process, such as a laser induced forward transfer (LIFT) process. Such a process is described in PCT/GB2024/051857 (Johnson Matthey Hydrogen Technologies Limited).

Preferably, the catalyst ink is applied to the substrate in a roll-to-roll coating process. More preferably, the catalyst ink is applied to the substrate in a roll-to-roll coating process using an apparatus comprising a slot-die or a gravure roller, or comprising a laser transfer apparatus, preferably a LIFT apparatus.

The anode catalyst ink may be applied to the substrate continuously or discontinuously (intermittently). Preferably, the catalyst ink is applied to the substrate intermittently. An intermittent application process provides a pattern of discontinuous catalyst layer patches on the substrate. Such patches correspond to the active area in an electrolyser stack, increasing utilisation of catalyst ink and reducing waste. Preferably, the catalyst ink is applied to the substrate in a roll-to-roll coating process comprising a slot-die or a gravure roller, or comprising a laser transfer apparatus, configured for intermittent delivery of the catalyst ink, such as a roll-to-roll coating process comprising a slot-die configured for intermittent delivery of the catalyst ink. Such intermittent delivery at low iridium loading is facilitated through the use of the anode catalyst layers as described herein, offering a reduction in defects. An example of an intermittent slot die process is described in US2024/0290936 A1 which is incorporated herein by reference.

The process comprises a step of drying the anode catalyst layer. Drying of the anode catalyst layer removes solvent from the layer and it will be understood by the skilled person that the drying temperature may be adjusted depending on the boiling point of the solvent(s) used in the catalyst ink. Suitably, the anode catalyst layer is dried at a temperature of at least 60°C, such as in the range of and including 60 to 180°C.

Typically, the substrate is a decal transfer substrate or a polymer electrolyte membrane, i.e. the application of the catalyst ink to form the anode layer is either direct application onto a polymer electrolyte membrane, or application onto a decal transfer substrate with subsequent transfer of the anode catalyst layer onto a polymer electrolyte membrane.

The material from which a decal transfer substrate is made should provide the required support, preferably be compatible with the ink, preferably be impermeable to the ink, be able to withstand the process conditions involved in transferring the anode layer onto the membrane, and be able to be easily removed after decal transfer without damage to the anode layer. Examples of materials suitable for use include a fluoropolymer, such as polytetrafluoroethylene (PTFE), ethylene tetrafluoroethylene (ETFE), perfluoroalkoxy polymer (PFA), fluorinated ethylene propylene (FEP - a copolymer of hexafluoropropylene and tetrafluoroethylene), and polyolefins, such as biaxially oriented polypropylene (BOPP).

In cases in which the substrate is a decal transfer substrate, the process suitably comprises the additional step of transferring the anode layer from the decal transfer substrate to the surface of a polymer electrolyte membrane. Suitably, the transfer is carried out using a hot press. Suitably, the hot press transfer is carried out at a temperature in the range of and including 140 to 180 °C at a pressure in the range of an including of 400 to 800 PSI.

In cases in which the substrate is a polymer electrolyte membrane, the membrane is suitably provided on a backing material. It may be preferred that the membrane has a cathode catalyst on the opposite face of the membrane to which the catalyst ink is applied. In such cases the polymer electrolyte membrane and the cathode catalyst layer are as described herein in relation to the catalyst-coated membrane.

The anode layers described herein may advantageously form part of a catalyst-coated membrane (CCM). Such CCMs have the anode layer on a first major face of a polymer electrolyte membrane. It will be understood by the skilled person that the anode layer may be present on the whole first major face of the polymer electrolyte membrane or may be present in one or more patches which correspond to the active areas of the catalyst-coated membrane when incorporated into an electrolysis cell.

The membrane comprises an ion-conducting polymer. Ion conducting polymers that are suitable for forming polymer electrolyte membranes are known to the skilled person and are available commercially. The ion-conducting polymer can be a proton-conducting polymer or an anion-conducting polymer, such as a hydroxyl anion-conducting polymer. Examples of suitable proton-conducting polymers include perfluorosulphonic acid ionomers (e.g. Nafion (RTM) (Chemours), Aciplex^{®} (Asahi Kasei), Aquivion (RTM) (Syensqo), Flemion^{®} (Asahi Glass Co.), or ionomers based on a sulphonated hydrocarbon such as those available from FuMA-Tech GmbH as the fumapem^{®} P, E or K series of products (JSR Corporation, Toyobo Corporation, and others). Examples of suitable anion-conducting polymers include A901 and A201 made by Tokuyama Corporation, Fumasep FAA from FuMA-Tech GmbH, and Aemion polymers from lonomr Innovations. In cases in which the catalyst-coated membrane is for a PEM water electrolyser, the ion-conducting polymer is suitably a proton conducting polymer, and in particular a partially- or fully-fluorinated sulphonic acid polymer. Examples of suitable proton-conducting polymers include perfluorosulphonic (PFSA) acid polymers. It may be preferred that the ion-conducting polymer is a PFSA polymer and has an equivalent weight (EW) greater than 450 EW, greater than 550 EW, greater than 650 EW, or greater than 700 EW. For example, it may be preferred that the ion-conducting polymer is a PFSA polymer with an equivalent weight in the range of and including 600 to 1200 EW, such as in the range of and including 700 to 1000 EW.

The polymer electrolyte membrane may include additional components such as recombination catalysts, radical scavengers and reinforcement components. Recombination catalysts, such as platinum catalysts, for example Pt/C or platinum black, catalyse the reaction between hydrogen and oxygen and therefore help to reduce the cross-over of hydrogen through the membrane during electrolysis. Radical scavengers, such as oxides of cerium (for example CeO₂), can help to increase membrane durability.

Suitable reinforcing components are porous polymer materials, for example a microporous web or fibres of a polymer material, such as polyether ether ketone (PEEK), polytetrafluoroethylene (PTFE), polyvinylidene fluoride (PVDF), ethylene tetrafluoroethylene (ETFE), perfluoroalkyl alkane (PFA), or fluorinated ethylene propylene (FEP). For example, the planar reinforcing component may comprise electrospun PVDF or forcespun PVDF. In a preferred embodiment, the porous polymer material is expanded PTFE (ePTFE), for example the microporous web structures of ePTFE supplied by Donaldson Company, Inc., known as Tetratex^{®}, or supplied by other manufacturers. In other preferred embodiments, the reinforcing component can comprise a network of fibres (e.g. nanofibres), such as a network comprising polybenzimidazole (PBI) fibres, or a woven fabric, for example a woven fabric formed from PTFE thread. The network of fibres can be a non-woven mat of fibres (e.g. nanofibres), such as an electrospun mat of fibres or nanofibres.

Advantageously, the catalyst-coated membrane has restricted swelling in water at elevated temperatures. Such a restriction offers increased durability of the catalyst-coated membranes incorporating low iridium layers, which may suffer surface structure disruption with excessive swelling. Such restricted swelling may be provided, for example, by the incorporation of multiple polymeric reinforcements into the membrane, or by using a polymeric reinforcement with high tensile strength in both x and y dimensions, such as a woven fabric.

Therefore, in some embodiments, the polymer electrolyte membrane has two or more reinforcing components, such as two or more layers of a microporous web of polymer, such as ePTFE. In some other embodiments the electrolyte membrane comprises a reinforcing component in the form of a woven fabric, such as a woven fabric formed from polymer threads, such as ePTFE or PEEK threads. Suitable materials are described in US11742507B2 (AGC Inc).

Preferably, the polymer electrolyte membrane has a thickness of less than or equal to 100 µm. It may be preferred that the membrane has a thickness of less than or equal to 95 µm, 90 µm, or 85 µm. It may be preferred that the membrane has a thickness of at least 10 µm, such as at least 15 µm, at least 20 µm, at least 25 µm, at least 30 µm or at least 40 µm. It may be further preferred that the membrane has a thickness in the range of and including 10 to 100 µm, such as 15 to 100 µm, 20 to 100 µm, 30 to 100 µm, 30 to 90 µm, or 40 to 90 µm. The membrane thickness may be measured by scanning electron microscopy (SEM). SEM analysis is carried out on cross sections of the membrane and the membrane thickness measured at multiple (for example 10) points. The thickness values are then determined by calculating the arithmetic mean of the measured values. Typically, the SEM measurement is carried out on a cross section of the catalyst-coated membrane (suitably dried at 0% relative humidity), which is embedded in resin, ground and polished.

Typically, a cathode catalyst layer is provided on the second major face of the polymer electrolyte membrane (i.e. the opposite side of the membrane to the anode catalyst later). Such cathode catalyst layers comprise a hydrogen evolution reaction (HER) catalyst, such as a platinum-based catalyst, for example platinum on a carbon support (Pt/C). Suitably, the cathode catalyst layer comprises a hydrogen evolution reaction catalyst, such as a platinum-containing catalyst and an ion-conducting polymer. Such layers may be provided by directly coating the membrane or, for example, by decal transfer as hereinbefore described for the anode catalyst layer.

The catalyst-coated membrane may comprise a seal material on a first face and / or a second face of the CCM. Such seal materials are typically formed from non-ion conducting polymers, and may be positioned around the edge region of the CCM, for example on exposed surfaces of the polymer electrolyte membrane where no electrocatalyst is present (but will also often overlap on to the edge of the electrocatalyst layer) to provide a seal to prevent escape of reactant and product gases, to reinforce and strengthen the edge of the CCM and provide a suitable surface for supporting subsequent components such as sub-gaskets or elastomeric gaskets. An adhesive layer may be present on one or both surfaces of the seal material.

In a water electrolyser, additional transport layers are positioned each side of a membrane to facilitate reagent and product transfer to and from the catalyst layers, and to provide electrical contact. The catalyst-coated membrane and transport layer(s) are referred to together as a membrane electrode assembly (MEA). These additional transport layers may be known as porous transport layers or gas diffusion layers. These layers may or may not be directly attached to the CCM. Other components of a water electrolyser may include bipolar plates and current collector plates. Stacks of such assemblies make up an electrolyser system including power and control systems.

The MEAs of the present invention are configured such that the anode layer is positioned between the electrolyte membrane and a transport layer such that (a) it is in direct contact with the transport layer; or (b) it is in contact with an intermediate conductive layer positioned between the thin film coating and the transport layer.

Suitable transport layers at the anode side of the CCM are known to the skilled person and are typically formed from a metal-based porous structure. Such transport layers must be sufficiently conducting and in a form that is compatible with positioning adjacent to the CCM (without, for example, sharp edges or protrusions that would damage the membrane during use). Such metal-based porous structures may be in the form of, for example, felts or non-woven cloths, mesh, foams and sintered compacts of metal-containing particles. For PEMWE applications, suitable PTLs comprise titanium. For AEMWE applications, suitable PTLs comprise nickel or stainless steel.

Suitable transport layers at the cathode side of the CCM are known to the skilled person and are typically non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet^{®} series available from SGL Technologies GmbH, Germany or AvCarb^{®} series from Ballard Power Systems Inc., or woven carbon cloths. The carbon paper, web or cloth may be provided with a further treatment prior to being incorporated into as MEA either to make it more wettable (hydrophilic) or more wet-proofed (hydrophobic). The nature of any treatments will depend on the type of electrochemical device and the operating conditions that will be used.

Figure 1 shows a schematic representation of an example of a water electrolyser (20) incorporating a CCM. A polymer electrolyte membrane (22) is provided with an anode catalyst layer comprising an iridium-containing OER catalyst (24) and a cathode catalyst layer (26) incorporating a platinum-containing catalyst, the anode and cathode catalyst layers being provided on opposite faces of the polymer electrolyte membrane (22). Adjacent to the anode catalyst layer (24) is a transport layer (28) which is typically a metal-based porous structure and may be known as a porous transport layer (PTL). Adjacent to the cathode catalyst layer (26) is a transport layer (30) which is typically a non-woven paper or web comprising a network of carbon fibres and may be known as a gas diffusion layer (GDL). Adjacent to each transport layer (28, 30) is a bipolar plate (32) which provides flow channels for gases and uniformly distributes water participating in the reaction on the electrode surface. Some components, such as seal material layers and sub-gaskets are not shown in this representation but may be present as understood by the skilled person.

The present invention will now be described with reference to the following examples, which are provided to assist with understanding the present invention and are not intended to limit its scope.

### Examples

### Measurement of sheet resistance

The in-plane sheet resistance of the anode catalyst layer was measured using a Loresta-GX MCP-T700 with a LSP probe from NH instruments. A 5x5 cm sample of the anode catalyst layer is cut from the print, and hot pressed following the same procedure used to fabricate the CCM. Samples were pressed for 3 minutes at 800 psi and 195 °C. After hot pressing, 5 measurements were made over 30 seconds with the average reported.

### Mercury intrusion porosimetry

The determination of the modal pore size and pore volume by mercury intrusion porosimetry can be carried out by the following process. The electrocatalyst layer to be measured was cut into strips which were stacked and rolled prior to loading into a specialised sample holder known as a penetrometer. The penetrometer containing the strips was mounted into a Micromeritics Autopore IV 9520 mercury porosimeter and the mercury pressure increased from ~3.0 to 60,000 psia in small steps, with accompanying measurements of the volume of mercury intruded into the sample, derived from capacitance changes measured along the stem of the penetrometer. The pore size distribution was then calculated from the Washburn equation, assuming a contact angle for Hg of 130°, which relates the applied pressure to the diameter of the pores into which mercury is intruded, thereby giving the amount of porosity in pores from ~60 µm to 3 nm in diameter. The intrusion curves were corrected for ion-conducting membrane compression by measuring samples of the bare ion-conducting membrane in the penetrometer over the same pressure range (~3.0 to 60,000 psia). The resulting apparent volume of intrusion, due to ion-conducting membrane compression, was subtracted from the data for the catalysed ion-conducting membrane supported layers to ensure that no apparent pore volume due to ion-conducting membrane compression was assigned to the electrocatalyst layer.

The porosity at <1 µm and >3 nm pore diameter is selected as the appropriate pore size range for calculating porosity characteristics in the layers of this invention (including total pore volume). This avoids misleading information from large, inhomogeneous features such as cracks or voids.

### Iridium layer loading

The loading of iridium in the anode catalyst layer was measured by x-ray fluorescence (XRF) (FISCHERSCOPE (RTM) X-ray XRF measuring instrument available from Helmut Fischer).

### Measurement of thickness

The mean average cross-sectional thickness of the anode catalyst layer can be determined using data collected from mercury intrusion porosimetry analysis as follows: the total volume of pores measured by mercury intrusion porosimetry is added to the volume of the catalyst in the anode catalyst layer (calculated from the loading of catalyst in the layer divided by catalyst density) and the volume of the ionomer in the anode catalyst layer (calculated from the loading of ionomer in the layer divided by the ionomer density); the total volume of the anode catalyst layer so obtained is then divided by the area of the analysed anode catalyst layer, obtaining an average cross-sectional thickness for a given anode catalyst layer sample.

### Examples 1 to 12 (Ex. 1 to 12)

A series of supported IrOx electrocatalyst materials was produced using the following method and with variations as set out in Table 1.

General method: ~8 g of particulate TiO₂ or ZrO₂ was dispersed in deionised (DI) water (150mL) using a high shear mixer at 10,000 rpm for 15 minutes. The mixture was transferred to a baffled process vessel and the reaction stirred at 250 rpm using an overhead stirrer.

A Na₂O₂ iridium fusion product was prepared by combining iridium powder (300 g, 400 mesh corresponding to particle sizes below 23 µm) with 900 g of milled sodium peroxide and the mixed using WAB T2F Turbula mixer to get homogenous mixture. The mixture was transferred to an alumina crucible and heated using electrical muffle furnace (temperature approximately 500 °C). Mixture heated at 500°C for 2 hours.

A portion of the Na₂O₂ iridium fusion product was added to the suspension of the transition metal oxide (amount depending on the desired iridium loading). The target iridium loading was 30 wt.% for Examples 1-9; 45 wt.% for Examples 10 and 11; and 60 wt.% for Example 12). The mixture was stirred for 30 minutes to ensure complete mixing. Concentrated nitric acid (HNO₃) was added drop-wise to the stirred mixture. Once the mixture reached a pH of 3.25, the solution was maintained at pH 3.25 for 30 minutes with additional addition of nitric acid as necessary.

The product was collected by vacuum filtration and washed with DI water until the filtrate conductivity measured below 50 µS/cm. The precipitate was dried at 60 °C under vacuum (~20 mBar) for 16 hours. The product was then heated at 150 °C for a period of 4 hours in air.

The supported IrOx electrocatalyst was then formulated into an anode ink by weighing and mixing in sequential steps: the supported IrOx electrocatalyst, water, an ionomer dispersion (AGC IC154), and an alcohol (ethanol or n-propanol) in appropriate proportions to form a dispersion. The dispersion was bead milled together to form a well-dispersed ink. The dispersion was then diluted using a water/alcohol mix to adjust the solids content to the desired value for coating.

The anode ink was coated onto a PTFE decal transfer substrate using k-bar coating to form a wet anode catalyst layer. The thickness of the layer, and consequently its iridium loading, is controlled by varying the k-bar used for coating. The wet anode catalyst layer was dried at a temperature of up to 200 °C to remove the solvent.

Catalyst layers were simultaneously transferred from the decal transfer substrate to a polymer electrolyte membrane (800 EW, PFSA ionomer, approximately 80-micron thickness, with 2 ePTFE reinforcements) using a hot press. A CCM was formed by decal transfer of a Pt/C cathode layer onto the opposite face of the membrane with a Pt loading of 0.4 mg_{Pt}/cm². Samples were pressed for 3 minutes at 800 psi and 195 °C.

**Table 1:**

| | Support material | lonomer : catalyst weight ratio % |
|---|---|---|
| Example 1 | ZrO₂ (E101 from Luxfer) | 20 |
| Example 2 | | 20 |
| Example 3 | | 20 |
| Example 4 | | 12 |
| Example 5 | | 8 |
| Example 6 | ZrO₂ (E15 from Luxfer) | 20 |
| Example 7 | | 16 |
| Example 8 | | 12 |
| Example 9 | | 8 |
| Example 10 | TiO₂ (P25 from Evonik) | 30 |
| Example 11 | | 30 |
| Example 12 | | 30 |

### Electrochemical testing

The electrochemical performance of the CCMs was tested by the following method. The CCM was first conditioned with water flowing across the anode at 80 °C for 12 h. Then the polarisation measurement was performed. Anode and cathode pressures were kept equal at 0 bar. The current density was increased from 0 A/cm² to 1 A/cm² in steps of 0.04 A/cm² and then from 1 A/cm² to 4 A/cm² in steps of 0.08 A/cm². The current density was then decreased from 4 A/cm² to 1 A/cm² in steps of 0.08 A/cm² and then from 1 A/cm² to 0 A/cm² in steps of 0.04 A/cm². Each current density was held for 20 seconds. The upward going measurement (low to high current) was used for further analysis. The results of the electrochemical testing are shown in Table 2.

### Results

**Table 2:**

| | Layer thickness (µm) | Porosity (%) | Pore fraction of pores with diameter 50-500 nm (vol.%) | Median pore diameter (nm) | Ir loading (mg/cm²) | Sheet Resistance (kΩ/sq) | V at 2 A cm⁻² (V) |
|---|---|---|---|---|---|---|---|
| Ex. 1 | 4.7 | 41 | 51 | 143 | 0.213 | 4570 ± 86 | 1.729 |
| Ex. 2 | 4.9 | 41 | 48 | 143 | 0.211 | 13300 ± 218 | 1.739 |
| Ex. 3 | 5.1 | 42 | 54 | 124 | 0.214 | 12400 ± 213 | 1.730 |
| Ex. 4 | 5.7 | 48 | 56 | 116 | 0.254 | 11900 ± 305 | 1.737 |
| Ex. 5 | 5.2 | 49 | 63 | 121 | 0.240 | 7252 ± 144 | 1.728 |
| Ex. 6 | 3.0 | 23 | 34 | 154 | 0.217 | 19300 ± 193 | 1.760 |
| Ex. 7 | 3.6 | 32 | 46 | 149 | 0.256 | 16300 ± 189 | 1.746 |
| Ex. 8 | 3.8 | 41 | 48 | 109 | 0.237 | 12500 ± 562 | 1.730 |
| Ex. 9 | 3.9 | 42 | 46 | 121 | 0.251 | 17200 ± 379 | 1.755 |
| Ex. 10 | 6.2 | 42 | 49 | 87 | 0.283 | 5998 ± 158 | 1.719 |
| Ex. 11 | 3.3 | 37 | 37 | 101 | 0.165 | 13083 ± 212 | 1.754 |
| Ex. 12 | 8.9 | 32 | 62 | 101 | 0.589 | 781 ± 5 | 1.741 |

Correlations between anode catalyst layer properties and improved cell performance (e.g. voltage at 2 A/cm²) are non-trivial. However, Examples 1-12 demonstrate a general teaching that lower cell voltages (measured at 2 A/cm²), and hence improved cell performance, can be achieved when certain properties of the anode catalyst layer are controlled in combination, even at low iridium loadings (e.g. <0.60mgₗᵣ/cm²), as shown in Table 2. For example, cell voltages at 2 A/cm² were lower (improved) when the anode catalyst layer had a layer thickness of >3.0 µm (and preferably >3.3 µm), a sheet resistance of <19,300 kΩ/sq (and preferably <17,200 kΩ/sq), and wherein the pores that have a pore diameter in the range of 50 nm to 500 nm have a pore volume that is >34% (and preferably >37%) of the total pore volume (as measured by mercury intrusion porosimetry). Cell voltages at 2 A/cm² were further lowered (improved) when the anode catalyst layer had a layer thickness of >3.3 µm (preferably 23.6 µm, more preferably >3.6 µm and most preferably ≥3.8 µm), a sheet resistance of <17,200 kΩ/sq (preferably ≤916,000 kΩ/sq, more preferably <13,500 kΩ/sq, and most preferably ≤12,500 kΩ/sq), and wherein the pores that have a pore diameter in the range of 50 nm to 500 nm have a pore volume that is >37% (preferably ≥40%, more preferably ≥45%, more preferably ≥46%, and more preferably >46%) of the total pore volume. In addition, the anode catalyst layer preferably has a porosity of >23%, and preferably >32%. The lowest cell voltages at 2 A/cm² were achieved when the anode catalyst layer had a layer thickness of ≥3.8 µm, a sheet resistance of ≤13,500 kΩ/sq (preferably ≤12,500 kΩ/sq, and more preferably <10,000 kΩ/sq), preferably a porosity of >30%, (preferably ≥32% more preferably >32%, more preferably >40%, and more preferably ≥41%), and wherein the pores that have a pore diameter in the range of 50 nm to 500 nm have a pore volume that is ≥40%, (preferably ≥45%, more preferably ≥46%, and most preferably ≥48%) of the total pore volume. In addition, the anode catalyst layer preferably also has a median pore diameter of less than 150 nm.

Examples 1-12 also demonstrate that lower cell voltages (measured at 2 A/cm²) could be achieved when the anode catalyst layer had a layer thickness of >3.0 µm (and preferably >3.3 µm), a sheet resistance of <19,300 kΩ/sq (and preferably <17,200 kΩ/sq), and a porosity of >23% (and preferably >32%). Cell voltages at 2 A/cm² were further lowered (improved) when the anode catalyst layer had a layer thickness of >3.3 µm (preferably ≥3.6 µm, more preferably >3.6 µm and most preferably ≥3.8 µm), a sheet resistance of <17,200 kΩ/sq (preferably ≤16,000 kΩ/sq, more preferably <13,500 kΩ/sq, and most preferably ≤12,500 kΩ/sq), and a porosity of >23%, and preferably >32%. The lowest cell voltages at 2 A/cm² were achieved when the anode catalyst layer had a layer thickness of ≥3.8 µm, a sheet resistance of ≤13,500 kΩ/sq (preferably ≤12,500 kΩ/sq, and more preferably <10,000 kΩ/sq), and a porosity of >32%, (more preferably >37%, more preferably >40%, and more preferably ≥41 %).

## Claims

1. An anode catalyst layer for a polymer electrolyte membrane electrolyser, the anode catalyst layer comprising:
an oxygen evolution reaction (OER) electrocatalyst and an ion-conducting polymer,
wherein the oxygen evolution reaction electrocatalyst comprises an iridium-containing material supported on an inorganic oxide support material,
wherein the anode catalyst layer comprises a loading of iridium of less than 0.60 mgₗᵣ/cm²,
wherein the anode catalyst layer has a mean average cross-sectional thickness of ≥3.0 µm and ≤10 µm;
wherein the anode catalyst layer comprises pores having a total pore volume, wherein the pores comprise first pores having a pore diameter in a range of 50 nm to 500 nm,
wherein the first pores have a pore volume of at least 30% of the total pore volume of the pores in the anode catalyst layer, as measured by mercury intrusion porosimetry.

2. An anode catalyst layer according to claim 1, wherein the anode catalyst layer has a porosity of at least 20% based on the total volume of the anode catalyst layer.

3. An anode catalyst layer according to any of claims 1 or 2, wherein the anode catalyst layer has a sheet resistance of 20,000 kΩ/sq or less, preferably 17,500 kΩ/sq or less.

4. An anode catalyst layer according to any of claims 1 to 3, wherein the first pores of the anode catalyst layer have a pore volume of at least 34% of the total pore volume.

5. An anode catalyst layer according to any of claims 1 to 4, wherein the anode catalyst layer has a porosity of at least 25 vol.%, preferably at least 30 vol.%, more preferably at least 35 vol.%, more preferably at least 40 vol.%.

6. An anode catalyst layer according to any of claims 1 to 5, wherein the anode catalyst layer comprises a mean average cross-sectional thickness of ≥3.5 µm.

7. An anode catalyst layer according to any of claims 1 to 6, wherein the anode catalyst layer comprises a mean average cross-sectional thickness of ≤8.0 µm.

8. An anode catalyst layer according to any of claims 1 to 7, wherein the anode catalyst layer comprises a loading of iridium of 0.40 mgₗᵣ/cm² or less.

9. An anode catalyst layer according to any of claims 1 to 8, wherein the iridium-containing material comprises a doped or undoped iridium oxide (IrOx), or a doped or undoped iridium hydroxide oxide, an iridium mixed metal oxide, or a mixture thereof.

10. An anode catalyst layer according to any of claims 1 to 9, wherein the inorganic oxide support material comprises an oxide of an element selected from titanium, zirconium, niobium, tantalum, aluminium, manganese, cerium, tungsten, silicon, tin, or molybdenum.

11. An anode catalyst layer according to claim 10, wherein the inorganic oxide support material is selected from doped or undoped TiO₂, ZrO₂, Nb₂O₅, Ta₂O₅, Al₂O₃, MnO₂, Ce₂O₃, CeO₂, WO₃, SiO₂, SnO₂ or MoO₃.

12. An anode catalyst layer according to any of claims 1 to 11, wherein the inorganic oxide support material is particulate.

13. An anode catalyst layer according to any of claims 1 to 12, wherein the ion-conducting polymer is a proton conducting polymer.

14. A catalyst-coated membrane (CCM) for an electrolyser, the CCM comprising a polymer electrolyte membrane and an anode catalyst layer according to any of claims 1 to 13.

15. An electrolyser comprising an anode catalyst layer according to any one of claims 1 to 14, or a catalyst-coated membrane according to claim 14.
